# EUROPEAN PATENT APPLICATION

(11) **EP 3 973 832 A1**
(43) Date of publication of application: **30.03.2022**
(21) Application number: 20198652.8
(22) Date of filing: 28.09.2020
(51) Int. Cl.: A47J 43/046, A47J 43/07

(54) **APPARATUS AND METHOD FOR USE WITH INDUCTION HEATING**

(71) Applicant: Koninklijke Philips N.V., 5656 AG Eindhoven (NL)
(72) Inventor: MUELLER, Hannes, 5656 AE Eindhoven (NL); FLOESSHOLZER, Hannes Uwe, 5656 AE Eindhoven (NL)
(74) Representative: Kapoor, Pavan Puneet

(57) **Abstract**

An apparatus (10) for use with an induction heating element (50) is disclosed. The apparatus comprises a ferromagnetic base (20) arranged to convert magnetic energy from said induction heating element into thermal energy, an induction coil (24) arranged to convert magnetic energy from said induction heating element into electrical energy, a waterproof housing (30) containing an electronic circuit (32) conductively coupled to the induction coil; and a motor (34) controlled by said electronic circuit using said electrical energy; and an agitator (40) driven by said motor. Also disclosed is a system comprising the induction heating element and such an apparatus as well as a method of heating and stirring a food product in a diamagnetic container using such an apparatus on an induction heating element.

## Description

### FIELD OF THE INVENTION

The present invention relates to an apparatus for use with an induction heating element to stir and heat a food product in a diamagnetic container.

The present invention further relates to a system comprising such an apparatus.

The present invention further relates to a method using such an apparatus.

### BACKGROUND OF THE INVENTION

Induction heating is a popular technique for heating food. The induction heating element, which may form part of a kitchen appliance such as an induction hob, typically comprises a metal coil, e.g. a coil of copper wire, through which an alternating current is passed, thereby generating an oscillating magnetic field. In order to heat a substance such as a food product with induction heating, the substance has to be placed in a ferromagnetic container, e.g. a stainless steel pan or the like, and placed on the induction heating element. The oscillating magnetic field causes the generation of Eddy currents in the ferromagnetic material of the container, which Eddy currents heat up the ferromagnetic material, such that the substance is heated by heat transfer between the ferromagnetic material and the substance.

Hence, a limitation of induction heating is that a ferromagnetic container has to be used. This can be inconvenient, for instance because a food product is already contained in a non-metallic container such as a storage container or its original packaging, or because a ferromagnetic container is not readily available, e.g. because all ferromagnetic containers available to a user are already in use or require cleaning. In such a scenario, the food product may be heated or reheated in a microwave oven as an alternative, but several users dislike the use of microwave ovens for this purpose, and would prefer to use their induction heating sources instead.

Hence, there exists a need for an apparatus that can heat a food product with induction heating without requiring the use of ferromagnetic containers, and which can stir the food product during the heating process such that its user does not have to regularly stir the food product in order to ensure homogeneous heating of the food product, which for example may be cumbersome during a long cooking process, as the user may not be able to provide regular stirring for prolonged periods of time.

WO 2015/106762 A1 discloses an induction heating apparatus for heating a fluid in a receptacle. The induction heating apparatus comprises a first magnetic field being arranged adjacent to the receptacle and being arranged to rotate around a stirring axis with an adjustable frequency. The first magnetic field creates a magnetic torque capable of rotating a magnetic stirring device in the receptacle. The induction device further comprises a second magnetic field for inductive heating, the second magnetic field having a frequency and amplitude arranged for magnetic induction heat to be induced in the magnetic stirring device. The magnetic stirring device is arranged to rotate the fluid in the receptacle. Consequently, the magnetic stirring device may be used to stir and heat food products in non-ferromagnetic containers due to the heat transfer from the heat induced in the magnetic stirring device by the second magnetic field to the food product. However, a main drawback of this magnetic stirring device is that it has to be used in conjunction with an induction device capable of generating a rotating magnetic field in order to generate the stirring motion of the magnetic stirring device, such that the magnetic stirring device cannot be used with commonly used induction heating elements in which such a rotating magnetic field is not generated.

### SUMMARY OF THE INVENTION

The present invention seeks to provide an apparatus that can be used with any induction heating element to stir and heat a food product in a diamagnetic container.

The present invention further seeks to provide a system comprising such an apparatus.

The present invention further seeks to provide a method using such an apparatus.

According to an aspect, there is provided an apparatus for use with an induction heating element, the apparatus comprising a ferromagnetic base arranged to convert magnetic energy from said induction heating element into thermal energy, an induction coil arranged to convert magnetic energy from said induction heating element into electrical energy, a waterproof housing containing an electronic circuit conductively coupled to the induction coil and a motor controlled by said electronic circuit using said electrical energy; and an agitator driven by said motor.

The apparatus of the present invention combines a ferromagnetic heating element, i.e. the ferromagnetic base of the apparatus, for heating a food product through the generation of Eddy currents within the ferromagnetic base upon exposure to magnetic energy, i.e. an oscillating magnetic field, generated by an induction heating element, with an induction coil for converting a portion of the magnetic energy into electrical energy, which electrical energy is used by an electronic circuit to drive a motor, which motor in turn drives an agitator for stirring the food product into which the apparatus is placed. Consequently, an apparatus is provided that can be used to heat and stir food products in a diamagnetic container on an induction heating element such as a heating zone of an induction hob without the need for the induction heating element to generate a rotating magnetic field to activate the agitator. Hence, the apparatus according to embodiments of the present invention may be used with any type of induction heating element.

The induction coil may be exposed to said magnetic energy through an aperture within said ferromagnetic base in order to provide a compact design of the apparatus as well as to ensure that the induction coil can be positioned as close as possible to the induction heating element during use of the apparatus to ensure the generation of sufficient amount of electrical energy from the magnetic energy harvested by the induction coil, i.e. to ensure that the induction coil is exposed to sufficiently large magnetic field strengths induced by the induction heating element. Alternatively, the induction coil may be mounted around the ferromagnetic base to ensure that the induction coil is exposed to sufficiently large magnetic field strengths induced by the induction heating element.

The apparatus may further comprise a ferrite shield extending across said aperture such that the ferrite shield is located between the induction coil and the waterproof housing in order to shield the electronic circuit from exposure to the magnetic field induced by the induction heating element such as to protect the electronic circuit from malfunctioning.

In an embodiment, the apparatus further comprises at least one thermally insulating spacing member on a major surface of the ferromagnetic base facing away from the waterproof housing. This major surface is typically arranged to be the surface of the ferromagnetic base facing the bottom of the diamagnetic container in which the apparatus is to be placed. The at least one thermally insulating spacing member therefore acts as one or more the contact points of the apparatus with the diamagnetic container, in order to prevent excessive heat transfer from the ferromagnetic base to the diamagnetic container, e.g. to prevent the diamagnetic container from overheating, which may lead to irreversible damage to the diamagnetic container, e.g. in the case of the diamagnetic container being made of a thermoplastic.

In a particular embodiment, the at least one thermally insulating spacing member comprises a plurality of discrete spacer elements spatially separated from each other, such as a plurality of thermally insulating rubber feet. In another particular embodiment, the at least one thermally insulating spacing member comprises a thermally insulating film.

The agitator may be mechanically coupled to a rotatable axis driven by said motor in order to provide a mechanically driven agitator. Alternatively, the agitator may be magnetically coupled to said motor in order to provide a magnetically driven motor. In an embodiment, the apparatus further comprises a permanent magnet fitted on a rotatable axis driven by said motor, with the agitator comprising a ferromagnetic stirring element magnetically coupled to the permanent magnet such that upon rotation of the rotatable axis by the motor, the rotation of the permanent magnet creates a rotating magnetic field that causes the ferromagnetic stirring element to follow the rotation of the rotating magnetic field.

The waterproof housing may be spatially separated from the ferromagnetic base by a plurality of arms extending between the waterproof housing and the ferromagnetic base, with the agitator located within a clearance between the waterproof housing and the ferromagnetic base. This has the advantage that a particularly compact and user-friendly apparatus is provided.

In an embodiment, the ferromagnetic base has a diameter of at least 100 mm to ensure effective heat transfer from the ferromagnetic base to the food product and ensure detection of the ferromagnetic base by the induction heating element. The apparatus may further comprise at least one fin on a major surface of the ferromagnetic base facing the waterproof housing for stabilizing the apparatus during operation of the agitator, e.g. to prevent the apparatus from being displaced within the food product or from falling over during use of the agitator.

According to another aspect, a system for heating a liquid in a diamagnetic container is provided, the system comprising an induction heating element and the apparatus of any of the herein described embodiments. By providing a kit of parts including the induction heating element and the apparatus of the present invention, a user may use the induction heating element without the need for ferromagnetic cook wear, as diamagnetic containers may be used in conjunction with the apparatus of the present invention, given that the ferromagnetic base of the apparatus of the present invention provides the heating of the food product by means of the Eddy currents generated in the ferromagnetic base upon exposure of the base to the magnetic fields generated by the induction heating element.

The induction heating element may be provided in any suitable form. In a particularly advantageous embodiment, the induction heating element forms part of an induction hob.

In accordance with yet another aspect, there is provided a method of heating a liquid in a diamagnetic container, the method comprising placing the diamagnetic container containing said liquid on an induction heating element, placing the apparatus according to any of the herein described embodiments within said container over said induction heating element; and engaging the induction heating element to activate the apparatus. With this method, food products may be heated on an induction heating element without the need to use ferromagnetic cook wear to contain the food products to ensure heating of the food products.

### BRIEF DESCRIPTION OF THE DRAWINGS

Embodiments of the invention are described in more detail and by way of nonlimiting examples with reference to the accompanying drawings, wherein:
FIG. 1 schematically depicts a cross-sectional view of an apparatus according to an embodiment;
FIG. 2 schematically depicts a cross-sectional view of an apparatus according to another embodiment;
FIG. 3 schematically depicts a cross-sectional view of an apparatus according to yet another embodiment;
FIG. 4 schematically depicts a cross-sectional view of an apparatus according to yet another embodiment;
FIG. 5 schematically depicts a cross-sectional view of an apparatus according to yet another embodiment;
FIG. 6 schematically depicts a cross-sectional view of an apparatus according to yet another embodiment;
FIG. 7 schematically depicts a cross-sectional view of a system according to an embodiment; and
FIG. 8 is a flowchart of a method according to an example embodiment.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

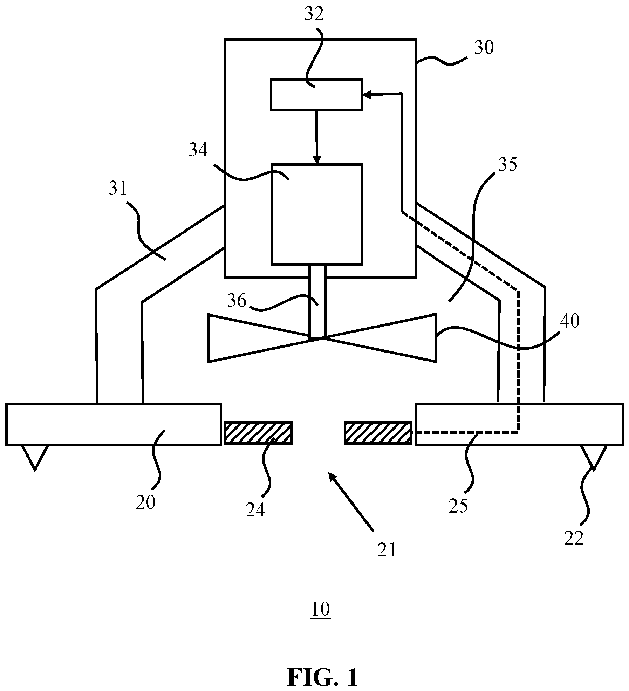

FIG. 1 schematically depicts an apparatus 10 according to an embodiment of the present invention. The apparatus 10 comprises a ferromagnetic base 20 such as a ferromagnetic metal disc or the like, comprising an aperture 21 for exposing an induction coil 24 to the magnetic field of an induction heating element onto which the apparatus 10 may be positioned within a diamagnetic container containing a food product. The ferromagnetic base in some embodiments has a diameter of at least 100 mm to ensure sufficient heat transfer between the ferromagnetic base and the food product to be heated, and to ensure detection of the apparatus 10 by an induction heating element onto which the apparatus 10 is to be positioned within a diamagnetic container of the food product. Preferably, the aperture 21 contains the induction coil 24 although alternative arrangements in which the aforementioned magnetic field passes through the aperture 21 in order to reach an induction cult 24 that is longitudinally displaced relative to the aperture 21 are equally feasible. The induction coil 24 typically converts the magnetic energy harvested from the oscillating magnetic field induced by the induction heating element into electrical energy, i.e. an electrical current, as is well-known per se. The induction coil 24 may take any suitable shape, e.g. a wire coil made of copper or any other suitable metal.

The apparatus 10 further comprises a sealed housing 30, i.e. a waterproof housing 30, which houses an electronic circuit 32 and a motor 34. The electronic circuit 32 is conductively coupled to the induction coil 24 and uses the electrical energy generated by the induction coil 24 to drive the motor 34. The electronic circuit 32 furthermore may protect the motor 34 from exposure to an overvoltage and/or overcurrent provided by the induction coil 24. The motor 34 is mechanically coupled to an agitator 40 located outside the waterproof housing 30 through a drive shaft or axis 36 extending through the waterproof housing 30. The motor 34 operates the agitator 40 by rotation of the drive shaft or axis 36, thereby causing rotation of the agitator 40. Consequently, when placed within a container containing a food product such as a liquid food product, with the container being positioned on the induction heating element such as a heating zone of an induction hob, engagement of the induction heating element causes the generation of electrical energy by the induction coil 24, which electrical energy is converted by the electronic circuit 32 at the motor 34 into rotational motion of the agitator 40, causing stirring of the food product within the container. The agitator 40 may take any suitable shape, e.g. a blade arrangement comprising one or more blades extending from the rotation axis 36.

At the same time, the oscillating magnetic field generated by the induction heating element induces the generation of Eddy currents within the ferromagnetic base 20, which heats up the ferromagnetic base 20 as is well-known per se, which heat generation is transferred from the ferromagnetic base 20 to the food product within the container in which the apparatus 10 is positioned, thereby heating the food product. From the foregoing, it will be understood that the container containing the food product may be a diamagnetic container, e.g. a plastic food storage container, a glass or ceramic bowl, a pan made of a diamagnetic metal such as a copper pan, and so on, because the Eddy currents do not have to be generated in the container wall, but are instead generated within the ferromagnetic base 20 of the apparatus 10.

In order to prevent direct thermal contact between the ferromagnetic base 20 of the apparatus 10 and the container containing the food product to be heated, the major surface of the ferromagnetic base 20 facing the container, typically the bottom surface of the ferromagnetic base 20, may carry one or more thermally insulating spacer members that provide a thermal barrier between the ferromagnetic base 20 and the food container such that overheating of the food container can be prevented. Such overheating of the food container may be disadvantageous for a number of reasons; for instance, overly hot food container may lead to scalding or burning of a person's hand when directly touching the food container, or may even lead to permanent damage of the food container, e.g. in case of a thermoplastic food container. In FIG. 1, the at least one thermally insulating spacer member is formed by a plurality of discrete spacer elements 22 that are spatially separated from each other, e.g. in provide a stable interface between the ferromagnetic base 20 and the food container. The discrete thermally insulating spacer elements 22 may take any suitable form, e.g. rubber feet or the like.

The waterproof housing 30 may be mounted on the ferromagnetic base 20 such that a clearance 35 housing the agitator 40 is formed between the waterproof housing 30 and the ferromagnetic base 20, which yields a particularly compact design of the apparatus 10. The waterproof housing 30 may be mounted on the ferromagnetic base 20 in any suitable manner, for example by means of a plurality of arms 31 extending between the waterproof housing 30 and the ferromagnetic base 20. The conductive coupling 25 between the inductive coil 24 and the electronic circuit 32 may extend through at least one of the arms 31 as will be readily understood by the skilled person.

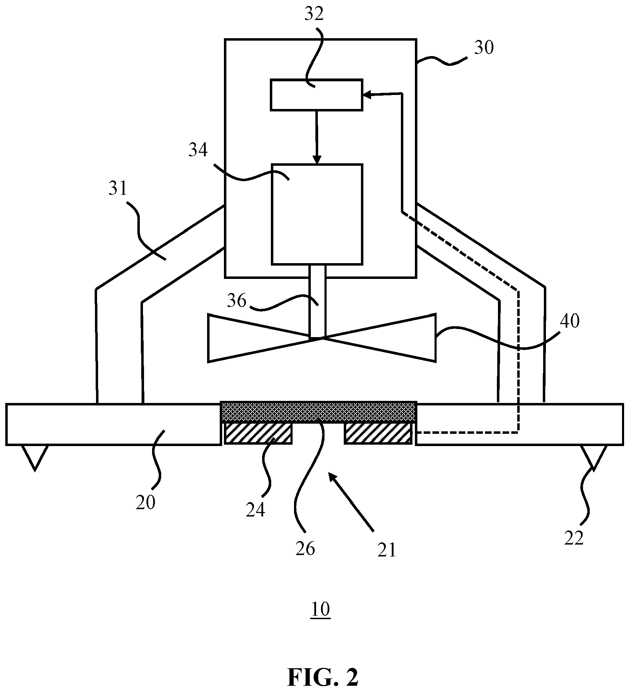

In another embodiment, which is schematically depicted in FIG. 2, the apparatus 10 further comprises a ferrite shield 26 arranged to shield the electronic circuit 32 from the induction coil 24. For instance, where the induction coil 24 is mounted in the aperture 21, the ferrite shield 26 may extend across the aperture 21 such that the ferrite shield 26 is located in between the induction coil 24 and the waterproof housing 30, thereby shielding the electronic circuit 32 from the oscillating magnetic field of the induction heating element, as exposure to such a magnetic field may jeopardize the correct operation of the electronic circuit 32.

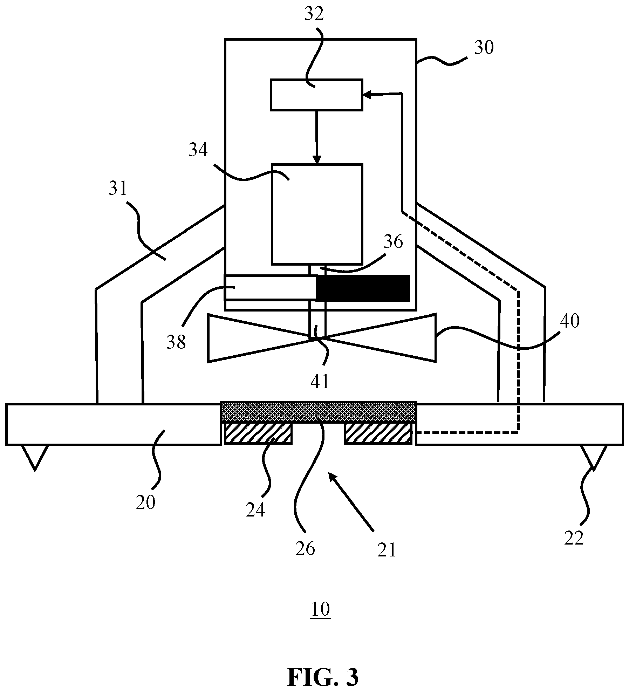

In the above described embodiments, the agitator 40 is mechanically coupled to the motor 34 through axis 36. However, in alternative embodiments, the agitator 40 may be magnetically coupled to the motor 34. An example embodiment of such a magnetic coupling is schematically depicted in FIG. 3, in which a permanent magnet 38 is mounted on the axis 36, e.g. within the waterproof housing 30, while the agitator 40 is mounted on an independently rotatable axis 41, which rotatable axis 41 may be mounted in any suitable manner, e.g. on the waterproof housing 30. In this embodiment the one or more blades of the agitator 40 are made of or contain a ferromagnetic material such that upon rotation of the permanent magnet 38 by the motor 34 driven by the electric current generated by the induction coil 24 as explained in more detail above, the permanent magnet 38 generates a rotating magnetic field, which causes the induction of rotation of the one or more ferromagnetic blades of the agitator 40 as they follow the rotation of this magnetic field. It is noted for the avoidance of doubt that this rotating magnetic field is generated independent from the induction heating element onto which the food container may be placed, such that the embodiments of the apparatus 10 in which the agitator 40 is magnetically coupled to the motor 34 may still be used with any type of induction heating element.

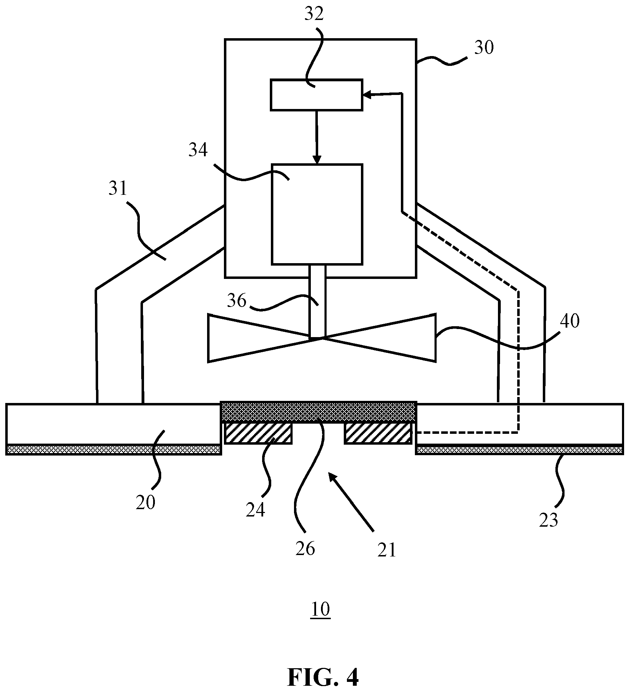

FIG. 4 schematically depicts yet another embodiment of the apparatus 10, in which the at least one thermally insulating member on the major surface of the ferromagnetic base 20 facing the food container is formed by a thermally insulating film 23 covering this major surface. Such a thermally insulating film may be made of any suitable thermally insulating material. Such materials are well-known per se to the skilled person and will not be explained further for the sake of brevity only.

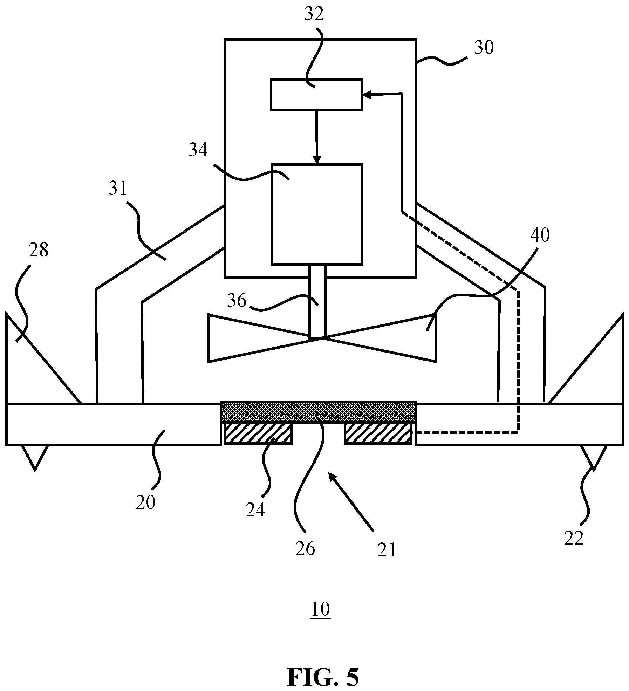

FIG. 5 schematically depicts a further refinement of the design of the apparatus 10, in which one or more fins 28 are fitted on the major surface of the ferromagnetic base 20 facing the waterproof housing 30. The one or more fins 28 stabilize the apparatus 10 during use, i.e. when the agitator 40 is engaged, e.g. to prevent movement of the apparatus 10 within the food container. The fins 28 preferably are dimensioned such that the area of each fin 28 exceeds the area of a blade of the agitator 40, thereby effectively preventing displacement of the apparatus 10 by swirling of the liquid food product induced by stirring of the liquid food product by the agitator 40. The one or more fins 28 may be made on any suitable material that can withstand the heat generated by the Eddy currents within the ferromagnetic base 20. In an embodiment, the fins 28 are made of the same material as the ferromagnetic base 20, e.g. form an integral part of the ferromagnetic base 20.

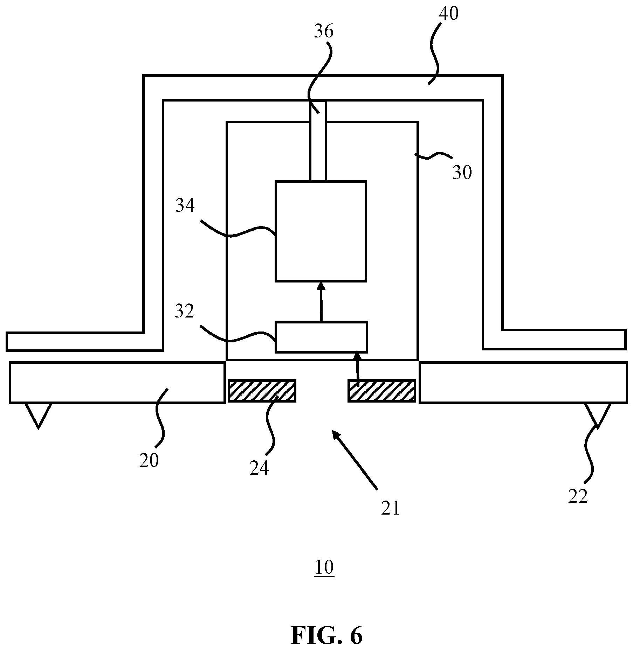

In the foregoing embodiments, the agitator 40 is located within the clearance 35 delimited by the arms 31 extending between the waterproof housing 30 and the ferromagnetic base 20. However, other arrangements may be contemplated. An example embodiment of such an alternative embodiment is schematically depicted in FIG. 6, in which the rotation axis 36 driven by the motor 3 extends from the roof of the waterproof housing 30 such that the agitator 40 is mounted on top of the waterproof housing 30. In order to induce effective stirring of the food product within the food container in which the apparatus 10 is placed, the agitator 40 may be shaped such that it extends around the waterproof housing 30 and along the upper surface of the ferromagnetic base 20. Alternative shapes of the agitator 40 are of course equally feasible. Where the agitator 40 is mounted on top of the waterproof housing 30, the clearance 35 between the waterproof housing 30 and the ferromagnetic base 20 may be omitted and the waterproof housing 30 may be mounted directly onto the ferromagnetic base 20, e.g. onto the ferrite shield 26.

In the above embodiments, the induction coil 24 is exposed to the magnetic fields of the induction heating source through the aperture 21 in the ferromagnetic base 20. However, it should be understood that alternative arrangements are equally feasible. For instance, the aperture 21 may be sealed by a blind wall or the like such that the blind wall is located in between the induction coil 21 and the induction heating element during use of the apparatus 10. In another embodiment, the aperture 21 may be omitted from the ferromagnetic base 20 and the induction coil 24 may be positioned around the ferromagnetic base 20. Other arrangements in which both the ferromagnetic base 20 and the induction coil 24 are exposed to the magnetic fields produced by the induction heating source are feasible as well, as will be readily understood by the skilled person.

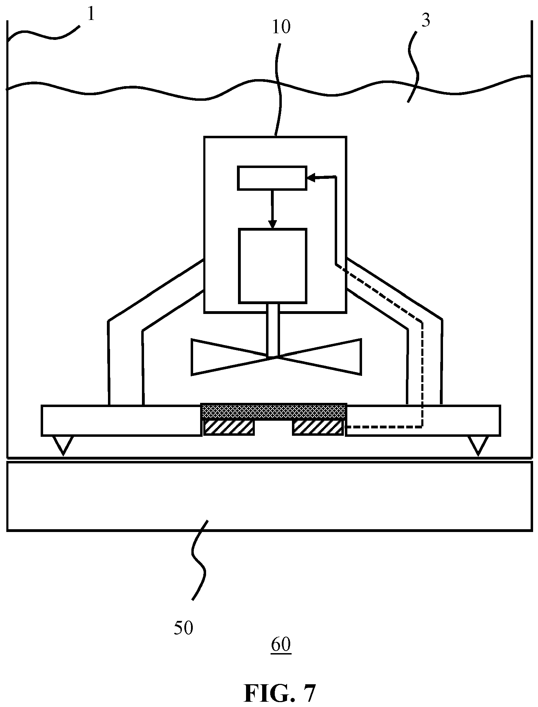

FIG. 7 schematically depicts a system 60 comprising the apparatus 10 according to any embodiment of the present invention and an induction heating element 50, such as a heating zone of an induction hob. The apparatus 10 may be placed within a diamagnetic food container 1, e.g. a glass or ceramic bowl, a plastic container, or the like, containing a food product 3, typically a liquid food product such as a soup or the like, such that the food product 3 may be heated by the ferromagnetic base 20 of the apparatus 10, whilst the agitator 40 of the apparatus 10 stirs the food product when the induction heating element 50 is engaged. As previously explained, the ferromagnetic base 20 of the apparatus 10 preferably has a diameter of at least 100 mm to ensure its detection by the induction heating element 50, such that the induction heating element 50 will switch on when the diamagnetic container 1 containing the liquid food product 3 and the apparatus 10 are positioned on the induction heating element 50.

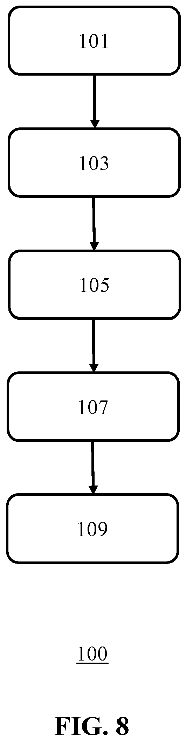

FIG. 8 is a flowchart of a method 100 of heating a liquid 3 in a diamagnetic container 1 according to an example embodiment. The method 100 commences in operation 101, e.g. by providing the diamagnetic container 1 containing the (liquid) food product 3. In the context of the present application, the term 'diamagnetic' also intends to cover materials that are sometimes referred to as non-magnetic, such as glass and wood, as these materials are in fact weakly diamagnetic. In operation 103, the diamagnetic container 1 is placed onto the induction heating element 50 and the apparatus 10 is placed within the diamagnetic container 1 such that the apparatus 10 is positioned over the induction heating element 50 in operation 105. Alternatively, the apparatus 10 is placed within the diamagnetic container 1 prior to positioning the diamagnetic container 1 onto the induction heating element 50. Upon positioning of the diamagnetic container 1 and the apparatus 10 over the induction heating element 50, e.g. a heating zone of an induction hob, the induction heating element 50 is switched on, which causes the generation of Eddy currents in the ferromagnetic base 20 of the apparatus 10, which heats the food product 3 within the diamagnetic container 1, whilst the electrical energy generated by the induction coil 24 is converted into rotational motion of the agitator 40 by the electronic circuit 32 and the motor 34, thereby stirring the food product 3 within the diamagnetic container 1. This simultaneous heating and stirring of the food product 3 within the diamagnetic container 1 by the apparatus 10 is continued until the food product has been prepared, after which the method 100 terminates in operation 109, e.g. by switching off the induction heating element 50.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. An apparatus (10) for use with an induction heating element (50), the apparatus comprising:
a ferromagnetic base (20) arranged to convert magnetic energy from said induction heating element into thermal energy;
an induction coil (24) arranged to convert magnetic energy from said induction heating element into electrical energy;
a waterproof housing (30) containing:
an electronic circuit (32) conductively coupled to the induction coil; and
a motor (34) controlled by said electronic circuit using said electrical energy; and
an agitator (40) driven by said motor.

2. The apparatus of claim 1, wherein the induction coil (24) is exposed to said magnetic energy through an aperture (21) within said ferromagnetic base (20).

3. The apparatus (10) of claim 2, further comprising a ferrite shield (26) extending across said aperture (21) such that the ferrite shield is located between the induction coil (24) and the waterproof housing (30).

4. The apparatus (10) of any of claims 1-3, further comprising at least one thermally insulating spacing member (22, 23) on a major surface of the ferromagnetic base (20) facing away from the waterproof housing (30).

5. The apparatus (10) of claim 4, wherein the at least one thermally insulating spacing member comprises a plurality of discrete spacer elements (22) spatially separated from each other.

6. The apparatus (10) of claim 4 or 5, wherein the at least one thermally insulating spacing member comprises a thermally insulating film (23).

7. The apparatus (10) of any of claims 1-6, wherein the agitator (40) is mechanically coupled to a rotatable axis (36) driven by said motor (34).

8. The apparatus (10) of any of claims 1-6, wherein the agitator (40) is magnetically coupled to said motor (34).

9. The apparatus (10) of claim 8, wherein the apparatus further comprises a permanent magnet (38) fitted on a rotatable axis (36) driven by said motor (34), and wherein the agitator (40) comprises a ferromagnetic stirring element magnetically coupled to the permanent magnet.

10. The apparatus (10) of any of claims 1-9, wherein the waterproof housing (30) is spatially separated from the ferromagnetic base (20) by a plurality of arms (31) extending between the waterproof housing and the ferromagnetic base, and wherein the agitator (40) is located within a clearance (35) between the waterproof housing and the ferromagnetic base.

11. The apparatus (10) of any of claims 1-10, wherein the ferromagnetic base (20) has a diameter of at least 100 mm.

12. The apparatus (10) of any of claims 1-11, further comprising at least one fin (28) on a major surface of the ferromagnetic base (20) facing the waterproof housing (30) for stabilizing the apparatus during operation of the agitator (40).

13. A system for heating a liquid (3) in a diamagnetic container (1), the system comprising an induction heating element (50) and the apparatus (10) of any of claims 1-12.

14. The system of claim 13, wherein the induction heating element (50) forms part of an induction hob.

15. A method (100) of heating a liquid (3) in a diamagnetic container (1), the method comprising:
placing (103) the diamagnetic container containing said liquid on an induction heating element (50);
placing (105) the apparatus (10) according to any of claims 1-12 within said container over said induction heating element; and
engaging (107) the induction heating element to activate the apparatus.
